# EUROPÄISCHE PATENTSCHRIFT

(11) **EP 1 694 988 B1**
(45) Veröffentlichungstag und Bekanntmachung des Hinweises auf die Patenterteilung: **25.06.2008**
(21) Anmeldenummer: 04803240.3
(22) Anmeldetag: 24.11.2004
(51) Int. Cl.: F16H 63/32

(54) **SCHALTGABEL**
SELECTOR FORK
FOURCHETTE DE BOITE DE VITESSES

(30) Priorität: 20.12.2003 DE 10360261
(43) Veröffentlichungstag der Anmeldung: 30.08.2006
(73) Patentinhaber: Schaeffler KG, 91074 Herzogenaurach (DE)
(72) Erfinder: KRÄMER, Klaus, 91460 Baudenbach (DE); PECHTL, Volker, 92224 Amberg (DE); SCHNAPP, Peter, 90431 Nürnberg (DE)
(86) Internationale Anmeldenummer: PCT/EP2004/013301
(87) Internationale Veröffentlichungsnummer: WO 2005/064211

(56) Entgegenhaltungen:
- EP-A- 0 395 241
- EP-A- 1 260 740
- DE-A1- 10 126 437

## Beschreibung

### Gebiet der Erfindung

Die Erfindung betrifft eine Schaltgabel eines Stufenwechselgetriebes mit einem gabelförmig ausgebildeten Grundkörper und mit mindestens einem separat zum Grundkörper gefertigten Führungselement, wobei das Führungselement fest mit dem Grundkörper verbunden ist, eine Schiebemuffe zumindest teilweise umgreift und mit einem Kraftübertragungselement der Schiebemuffe derart zusammenwirkt, dass Verschiebungen der Schaltgabel in axialer Richtung der Schiebemuffe auf diese übertragen werden.

Eine Schaltgabel ist aus der EP 0 395 241 bekannt. Danach ist an einem Nabenteil ein gabelförmiger Grundkörper einer Schaltgabel befestigt. Der Grundkörper ist massiv ausgeführt und umgreift eine Schiebemuffe zumindest teilweise. An den Enden des gabelförmig ausgeführten Grundkörpers ist jeweils ein zur Schiebemuffe hin gerichteter Gleitschuh angebracht. Der Gleitschuh setzt sich aus einem Führungselement und einem Befestigungselement zusammen. Das Führungselement erstreckt sich vom jeweiligen Gabelende bis zur Schiebemuffe. Weiterhin ist in das Führungselement eine Führungsnut eingebracht, in die ein auf der Schiebemuffe angebrachter ringförmig umlaufender Steg eingreift. Das Befestigungselement ist fest mit dem Führungselement verbunden und ist in einer Öffnung des Schaltgabelendes verliersicher aufgenommen. Bei axialer Verschiebung der Schaltgabel wird eine Kraft über die Gabelenden, das Befestigungselement und das Führungselement auf den ringförmigen Steg der Schiebemuffe übertragen. Nachteilig wirkt sich in dieser Ausführungsform die räumliche Trennung zwischen dem Angriffspunkt der Schiebemuffe im Führungselement und dem Befestigungselement aus. Die dadurch entstehenden Scherkräfte führen zu hohen Belastungen der Gleitschuhe, verbunden mit höherem Verschleiß und einer geringeren Lebensdauer. Ein weiterer Nachteil ergibt sich aus der Anordnung der Gleitschuhe ausschließlich an den Gabelenden der Schaltgabe, wodurch hohe Torsionsmomente an der Schaltgabel entstehen. Weiterhin ist es wünschenswert das hohe Gewicht der dargestellten Schaltgabel und die mit massiven Bauteilen verbundenen hohen Herstellungskosten zu reduzieren.

Eine weitere Schlatgabel ist aus der gattungsgemäßen DE-A-10126437 bekannt.

### Zusammenfassung der Erfindung

Der Erfindung liegt daher die Aufgabe zugrunde, diese geschilderten Nachteile zu vermeiden und somit eine gewichtsoptimierte und kostengünstig zu produzierende Schaltgabel zu schaffen, die den in Getriebe auftretenden hohen Kräften und Momenten standhalten und gleichzeitig die hohen Lebensdaueranforderungen erfüllen kann.

Erfindungsgemäß wird diese Aufgabe durch die Merkmale des Anspruchs 1 gelöst.

Ein gabelförmig ausgebildeter Grundkörper einer Schaltgabel umfasst den Außenumfang einer Schiebemuffe zumindest teilweise. Der Grundkörper ist zumindest in einem Bereich als zur Schiebemuffe hin offener U-förmiger Profilkörper ausgebildet. Ein separat gefertigtes Führungselement, welches dazu dient eine Verschiebung der Schaltgabel auf die Schiebemuffe zu übertragen, ist auf der der Schiebemuffe zugewandten Seite des Grundkörpers angebracht.

Dabei ist das Führungselement in der durch das U-förmige Profil gebildeten Führungsnut zumindest teilweise aufgenommen. Die Ausführung des Führungselements als separates Bauteil ermöglicht es geeignete Materialien zu verwenden. Dabei können Aspekte wie z. B. Festigkeit oder Reibungskoeffizient berücksichtigt werden. Durch das Anordnen des Führungselements innerhalb eines U-förmigen Profilkörpers werden die auf das Führungselement ausgeübten Schaltkräfte ohne Scherbelastung direkt an den Schaltgabelgrundkörper weitergegeben. Es treten keine zusätzlichen Hebelkräfte auf und da sich das Führungselement an den Schenkeln des U-förmigen Profilkörpers direkt abstützen ist dieses gegen Verdrehen gesichert.

In einer vorteilhaften Weiterbildung der Erfindung ist das Führungselement durch formschlüssige Elemente gegen Relativbewegungen zum Grundkörper in Umfangsrichtung der Schiebemuffe gesichert.

In einer speziellen Ausführungsform sind die formschlüssigen Elemente als Laschen an den Schenkeln des U-förmigen Profilkörpers ausgeführt, die aufeinander zu ragen.

Das Führungselement liegt an den Schenkeln und dem Grundkörper an, wodurch es gegen axiale, radiale und Torsionsbewegungen gesichert ist. Weiterhin liegt das Führungselement an den Laschen an, wodurch auch eine Bewegung in Umfangsrichtung verhindert wird.

Weiterhin sind auch formschlüssige Verbindungen wie Clipsverbindungen entlang des gesamten Führungselements mit dem Grundkörper denkbar. Ebenfalls vorstellbar wären geeignete Nut- und Federverbindungen an den Schenkeln des U-förmigen Profilkörpers bzw. des gesamten Grundkörpers.

Ein weiterer Vorteil ist, dass das Führungselement durch diese Maßnahmen in unverbautem Zustand verliergesichert am Grundkörper befestigt ist.

In einer vorteilhaften Weiterbildung der Erfindung erstreckt sich das Führungselement auf der der Schiebemuffe zugewandten Seite des Grundkörpers im wesentlichen von einem in Umfangsrichtung der Schiebemuffe liegenden Ende des Grundkörpers zum anderen Ende. Weiterhin ist vorgesehen, dass am Führungselement mindestens ein zur Schiebemuffe weisender Steg ausgebildet ist.
Der Steg kann sich entlang des gesamten Führungselements erstrecken. In einer alternativen Ausführungsform ist am Führungselement mindestens eine zur Schiebemuffe hin offene Führungsnut ausgebildet, wobei sich die Führungsnut entlang des gesamten Führungselements erstrecken kann.

In dieser Ausführungsform ist das Führungselement als eine dem Innenumfang des Grundkörpers angepasste Führungsschiene ausgeführt. Sie erstreckt sich von einem Ende des gabelförmigen Grundkörpers zum anderen, wobei sie entlang der gesamten Strecke an diesem anliegt. Die Führungsschiene wird also in radialer Richtung der Schiebemuffe entlang der gesamten Strecke vom Grundkörper unterstützt. Ebenso ist vorgesehen, dass das ringförmig um die Schiebemuffe umlaufende Mitnehmerelement entlang der gesamten Strecke der Führungsschiene in Wirkverbindung mit dieser steht. Dadurch wird die bei einem Schaltvorgang auf das Führungselement ausgeübte Kraft auf die gesamte Ausdehnung des Führungselements verteilt. Punktuelle Belastungen werden dadurch vermieden, wodurch der Verschleiß gesenkt und die Lebensdauer des Bauteils erhöht wird. Ein weiterer Vorteil ergibt sich daraus, dass, im Vergleich zum Stand der Technik, weniger Montagevorgänge nötig sind. Zunächst muss nur noch ein Bauteil am Grundkörper befestigt werden. Weiterhin entfallen durch den Einsatz von formschlüssigen Verbindungen und den aufeinander abgestimmten geometrischen Formen des Führungselements und des Grundkörpers aufwändige Positionier- und Befestigungsmaßnahmen, wie beispielsweise Ultraschallschweißen der Gleitschuhe.

Beispielhaft für das Zusammenwirken des Führungselementes mit der Schiebemuffe sind am Führungselement angebrachte Stege bzw. in das Führungselement eingebrachte Nuten genannt, die in Wirkverbindung mit dem entsprechenden, am Außenumfang der Schiebemuffe angebrachten Gegenstück stehen.

In einer weiteren Ausführungsform der Erfindung sind die in Umfangsrichtung der Schiebemuffe liegenden Enden des Grundkörpers als U-förmige Profilkörper ausgeführt. Das Führungselement ist innerhalb der Profilkörper angeordnet und durch diesen gegen Relativbewegungen zum Grundkörper gesichert. Der Bereich des Grundkörpers, der zwischen diesen beiden Enden liegt kann zur Erhöhung der Steifigkeit ebenfalls als Profilkörper ausgeführt sein. In diesem Zusammenhang sind L-förmige, U-förmige oder geschlossene Profile, wie beispielsweise Vierkant- oder kreisförmige Profile, möglich.

Ebenfalls denkbar ist, dass im Bereich zwischen den beiden Enden des Grundkörpers weitere U-förmige Profilkörper am Grundkörper ausgebildet sind, in denen das Führungselement ebenfalls angebracht ist. Vorteilhaft wirkt sich in dieser Ausführungsform aus, dass die Schaltkraft über das Führungselement an mehreren Bereichen auf den Grundkörper übertragen wird. Dadurch wird die Belastung an den einzelnen Übertragungsstellen reduziert, was wiederum zu geringerem Verschleiß und einer erhöhten Lebensdauer führt.

In einer alternativen Ausführungsform der Erfindung ist der gesamte Grundkörper als U-förmig ausgebildeter Profilkörper ausgeführt. In Umfangsrichtung der Schiebemuffe bildet der Grundkörper eine von einem Ende des Grundkörpers zum anderen Ende umlaufende Nut. In dieser Nut ist das Führungselement aufgenommen und formschlüssig gegen Relativbewegungen gegenüber dem Grundkörper gesichert. Während eines Schaltvorgangs wird in dieser Ausführungsform die Schaltkraft über den gesamten Grundkörper auf das Führungselement übertragen. Belastungsspitzen werden dadurch minimiert, was wiederum zu geringerem Verschleiß bzw. einer erhöhten Lebensdauer führt.

Weiterhin ist vorgesehen, dass der Grundkörper ein einteilig ausgeführtes Blechteil aus einem spanlosen Umformprozess ist. Dabei soll es sich vorteilhafterweise um ein Stahlblechteil handeln. Der Einsatz von spanlosen Umformprozessen und der Einsatz eines Blechteils als Ausgangsmaterial ermöglicht es neben den U-förmigen Profilkörpern weitere, die Steifigkeit der Schaltgabel erhöhende Profile in den Grundkörper einzubringen. Der dadurch erreichte Steifigkeitsgewinn des Grundkörpers ermöglicht den Einsatz von Dünnblech, wodurch bei der Herstellung des Grundkörpers geringere Kräfte eingesetzt werden müssen. Dies und die daraus resultierende Senkung der Tankzeiten führen zu einer signifikanten Kostenreduzierung bei der Herstellung einer erfindungsgemäßen Schaltgabel.

Weiterhin kann der U-förmig ausgebildete, als Blechteil ausgeführte Profilkörper durch partielle Einformungen am Grundkörper hergestellt sein. Alternativ kann der U-förmig ausgebildete, als Blechteil ausgeführte Profilkörper durch Umbiegen des Randes des Grundkörpers hergestellt werden.

Weiterhin ist vorgesehen, dass das Führungselement aus Kunststoff besteht. Durch den Einsatz von Kunststoff ergeben sich Vorteile wie beispielsweise geringe Herstellungskosten und geringes Gewicht des Führungselements. Weiterhin können Kunststoffe ausgewählt werden, die in Verbindung mit dem Material des Mitnehmerelements der Schiebemuffe einen geringen Reibungskoeffizienten aufweisen.

### Kurze Beschreibung der Zeichnungen

Weitere Merkmale der Erfindung ergeben sich aus der nachfolgenden Beschreibung und aus den Zeichnungen, in der Ausführungsbeispiele der Erfindung vereinfacht dargestellt sind. Es zeigen:
- Figur 1: eine perspektivische Ansicht einer ersten Ausführungsform einer erfindungsgemäßen Schaltgabel, die eine Schiebemuffe teilweise umgreift,
- Figur 2: einen Teilquerschnitt einer ersten erfindungsgemäßen Ausführungsform einer Schaltgabel,
- Figur 3: eine Schnittdarstellung entlang der Linie III-III aus Figur 2,
- Figur 4: eine Schnittdarstellung entlang der Linie IV-IV aus Figur 3 mit einer ersten Ausführungsform eines Führungselements,
- Figur 5: eine Schnittdarstellung entlang der Linie IV-IV aus Figur 3 mit einer zweiten Ausführungsform eines Führungselements,
- Figur 6: eine perspektivische Ansicht einer zweiten Ausführungsform einer erfindungsgemäßen Schaltgabel,
- Figur 7: eine Schnittdarstellung der Schaltgabel aus Figur 6 durch den mittleren Abschnitt.

### Ausführliche Beschreibung der Zeichnungen

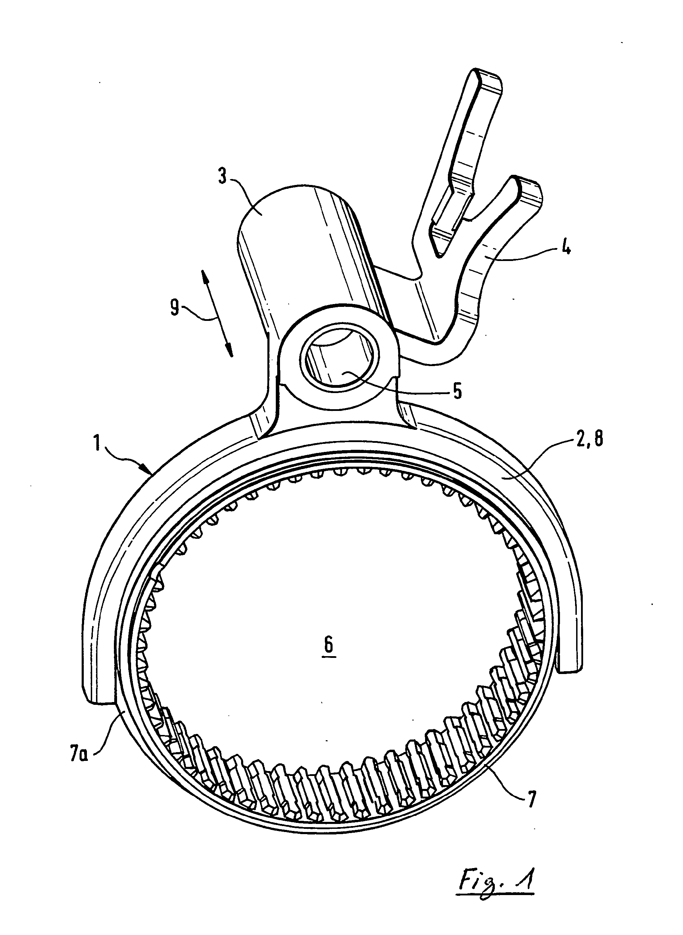

Figur 1 zeigt eine erste Ausführungsform einer erfindungsgemäßen Schaltgabel 1, mit einem Grundkörper 2, an dem eine Führungshülse 3 befestigt ist. An der Führungshülse 3 ist ein Schaltarm 4 angebracht. Die Verbindungen zwischen Grundkörper 2, Führungshülse 3 und Schaltarm 4 können beispielsweise mittels Schweiß- oder Klebverbindungen hergestellt sein. In die Bohrung der Führungshülse 3 ist eine Gleithülse 5 eingebracht, über die die Führungshülse 3 axial verschiebbar auf einer nicht dargestellten Schaltstange oder Schaltwelle gelagert ist. Ebenfalls vorstellbar ist eine direkte Verbindung des Grundkörpers 2 mit einer Schaltschiene.

Der Grundkörper 2 der Schaltgabel 1 bildet ein Schaltmaul 6, in das eine Schiebemuffe 7 eingreift. Der Grundkörper 2 umgreift die Schiebemuffe 7 zumindest teilweise. Wird die Schaltgabel 1 in axialer Richtung der Schiebemuffe 7 bewegt, so wirkt die Schaltgabel 1 mit einem Kraftübertragungselement 7a, welches am Außenumfang der Schiebemuffe 7 angebracht ist, in dieser Ausführungsform ein am Außenumfang der Schiebemuffe 7 umlaufender Steg, zusammen und bewirkt eine Verschiebung der Schiebemuffe 7.

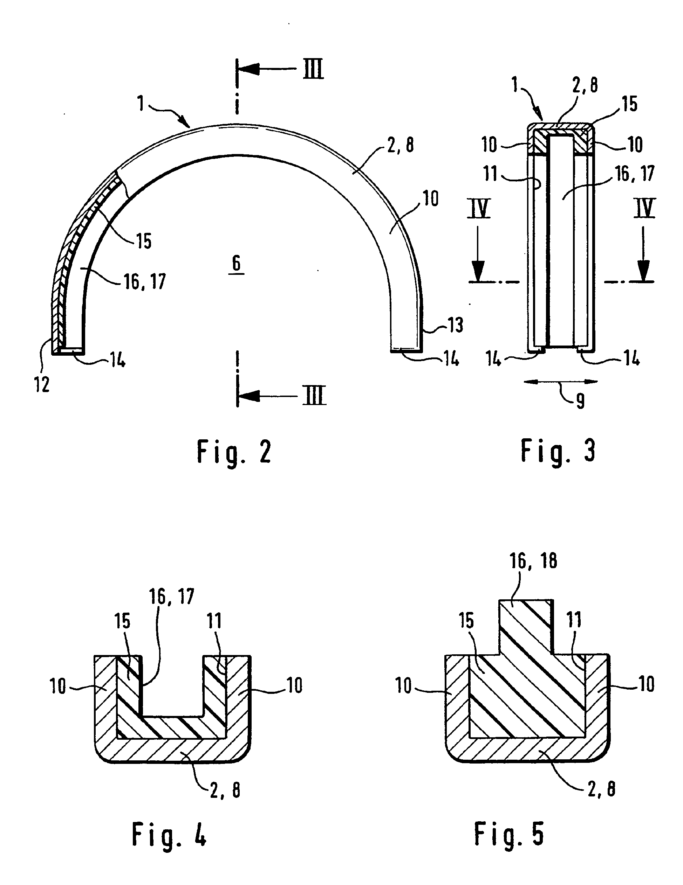

In den Figuren 2 und 3 ist eine erste Ausführungsform einer erfindungsgemäßen Schaltgabel 1 dargestellt. Mit 2 ist der gabelförmig ausgebildete Grundkörper 2 bezeichnet, der ein Schaltmaul 6 ausbildet. Weiterhin ist der Grundkörper 2 als zum Schaltmaul 6 hin offener U-förmiger Profilkörper 8 ausgebildet. Zu diesem Zweck sind an den in Verschieberichtung 9 der Schaltgabel 1 liegenden Ränder einteilig mit dem Grundkörper 2 ausgeführte Schenkel 10 vorgesehen. Die Schenkel 10 erstrecken sich ausgehend vom Grundkörper 2 in Richtung der Schiebemuffe 7. Dadurch wird eine am Grundkörper 2 umlaufende Nut 11 gebildet.

An den in Umfangsrichtung der Schiebemuffe 7 liegenden Enden 12 und 13 des Grundkörpers 2 sind die Schenkel 10 zu Laschen 14 umgebogen. Die Laschen 14 erstrecken sich ausgehend vom jeweiligen Schenkel 10 in Richtung des gegenüberliegenden Schenkels 10.

An der von der Schiebemuffe 7 abgewandten Seite des Grundkörpers 2 ist ein nicht dargestelltes Trägerelement vorgesehen. Möglich ist hierbei eine direkte Verbindung mit einer Schaltschiene oder einer Führungshülse 3 zur Aufnahme einer ebenfalls nicht dargestellten Schaltstange oder Schaltwelle.

Innerhalb der am Grundkörper 2 umlaufenden Nut 11 ist ein Führungselement 15 angebracht. Die geometrischen Abmessungen des Führungselements 15 sind den geometrischen Abmessungen der Nut 11 derart angepasst, dass die in Verschieberichtung 9 liegenden Flächen des Führungselements 15 an den Schenkeln 10 anliegen. Weiterhin erstreckt sich das Führungselement 15 von einem Ende 12 des Grundkörpers 2 zum anderen Ende 13, so dass es an beiden Enden 12 und 13 an den dort ausgebildeten Laschen 14 anliegt. Das Führungselement 15 ist durch den Grundkörper 2, die Schenkel 10 und die Laschen 14 gegen Verlieren gesichert.

Das Führungselement 15 ist mit einem Mitnehmerelement 16 versehen, über das es mit einer Schiebemuffe 7 zusammenwirkt und eine axiale Verschiebung des Grundkörpers 2 auf die Schiebemuffe 7 überträgt. Als Mitnehmerelement 16 ist beispielsweise eine Führungsnut 17 (Figur 4) oder ein Steg 18 (Figur 5) vorgesehen. Das Mitnehmerelement 16 kann entlang des gesamten Führungselements 15 verlaufen, allerdings sich auch Ausführungsformen denkbar, in denen nur gewisse Bereiche des Führungselements 15 mit dem Mitnehmerelement 16 versehen sind.

Bei einer Verschiebung der Schaltgabel 1 in Verschieberichtung 9 wird diese Bewegung über die Schenkel 10 auf das Führungselement 15 übertragen. Mit Hilfe des Mitnehmerelements 16 wird die mit der Bewegung assoziierte Schaltkraft über das Kraftübertragungselement 7a auf die Schiebemuffe 7 übertragen, wodurch die Schiebemuffe 7 ebenfalls in Verschiebungsrichtung 9 bewegt wird.

Vorteilhafterweise ist das Führungselement 15 separat zum Grundkörper 2 aus einem geeigneten Kunststoff gefertigt. Die Verbindung zwischen Grundkörper 2 und Führungselement 15 kann neben der beschriebenen Art und Weise natürlich auch über andere formschlüssige Maßnahmen, wie Nut- und Federverbindungen oder Clipsverbindungen, realisiert werden.

Der Grundkörper 2 ist vorteilhafterweise ein einteilig ausgeführtes, in einem spanlosen Umformprozess gefertigtes Blechteil. In der in den Figuren 2 und 3 dargestellten Ausführungsform einer erfindungsgemäßen Schaltgabel 1 erfolgt der Kraftübertrag auf Grund der besonderen Ausführungsform des Führungselements 15, des Mitnehmerelements 16 und des Grundkörpers 2 über die gesamte Länge des Grundkörpers 2. Das Führungselement 15 stütz sich auf seiner gesamten Länge an den Schenkeln 10 des Grundkörpers 2 ab. Gleichzeitig wirkt das über die gesamte Länge des Führungselements 15 verlaufende Mitnehmerelement 16 auf seiner vollen Länge mit der Schiebemuffe 7 zusammen. Bei Verschiebungen der Schaltgabel 1 verteilen sich die zwischen Grundkörper 2 und Schiebemuffe 7 wirkenden Schaltkräfte über den gesamten Grundkörper 2. Durch die gleichmäßige Belastung des gesamten Grundkörpers 2 ist bei dessen Fertigung der Einsatz von Dünnblech möglich, wodurch die bei der Formgebung des Grundkörpers 2 wirkenden Kräfte minimiert werden. Dies führt zu einer erheblich Produktionskostensenkung und zu niedrigeren Taktzeiten bei der Herstellung. Ein weiterer Vorteil dieser Ausführungsform erwächst aus der Ausführung des Führungselements 15, welches nahezu den gesamten Grundkörper 2 überdeckt. Im Vergleich zu einer Ausführungsform aus dem Stand der Technik in dem einzelne Gleitschuhe am Grundkörpers 2 angebracht werden, sind hier keine aufwändigen Positionier- und Befestigungsmaßnahmen wie beispielsweise Ultraschallschweißen notwendig.

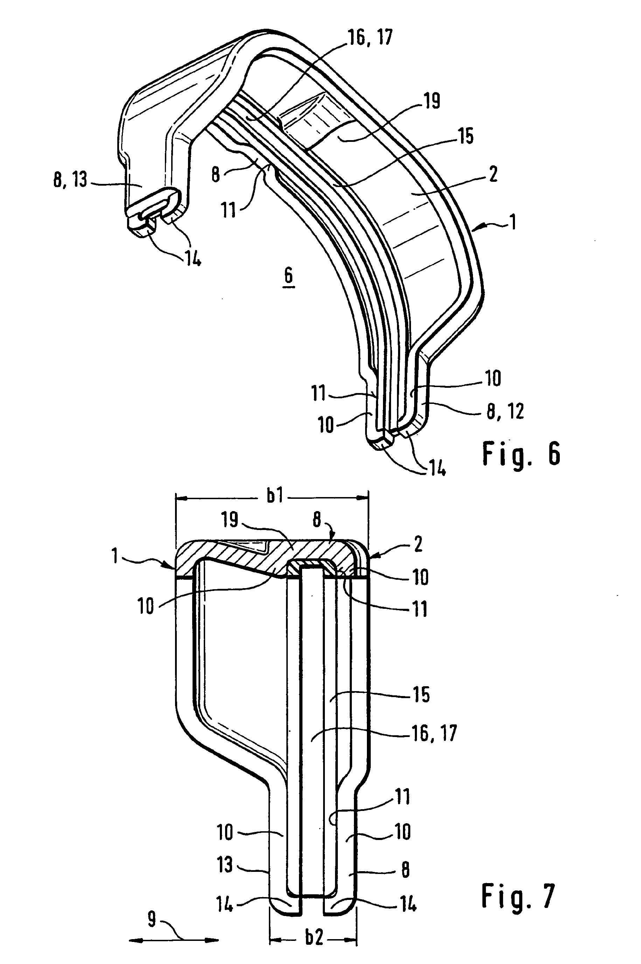

In Figur 6 und Figur 7 ist eine zweite Ausführungsform einer erfindungsgemäßen Schaltgabel 1 dargestellt. Mit 2 ist ein gabelförmig ausgebildeter Grundkörper 2 bezeichnet, der im eingebauten Zustand eine Schiebemuffe 7 zumindest teilweise umgreift. Weiterhin ist ein Führungselement 15 dargestellt, das am Grundkörper 2 an der zur Schiebemuffe 7 gewandten Seite angebracht ist. Das Führungselement 15 erstreckt sich zwischen den beiden in Umfangsrichtung der Schiebemuffe 7 liegenden Enden 12 und 13 des Grundkörpers 2, wobei es auf seiner gesamten Länge am Grundkörper 2 anliegt.

Der Grundkörper 2 ist im Bereich seiner Enden 12 und 13 und in einem mittleren Abschnitt 19 als zur Schiebemuffe 7 hin offener U-förmiger Profilkörper 8 ausgeführt. Die Profilkörper 8 bilden Nuten 11, in denen das Führungselement 15 angeordnet ist. Dabei sind die geometrischen Abmessungen der Nuten 11 denen des Führungselementes 15 derart angepasst, dass das Führungselement 15 in Verschieberichtung 9 an den Schenkeln 10 des Profilkörpers 8 anliegt. Die Schenkel 10 der Profilkörper 8 können beispielsweise durch Umbiegen der in Verschieberichtung 9 der Schaltgabel 1 liegenden Ränder des Grundkörpers 2 hergestellt werden. Dies ist in dieser Ausführungsform im Bereich der Enden 12 und 13 realisiert. Im mittleren Abschnitt 19 ist der U-förmige Profilkörper 8 durch partielle Einformungen am Grundkörper 2 hergestellt.

Weiterhin sind die Schenkel 10 des Profilkörpers 8 an den Enden 12 und 13 des Grundkörpers 2 mit Laschen 14 versehen. Die Laschen 14 sind durch Umbiegen der Schenkel 10 ausgebildet, wobei die Laschen 14 ausgehend von den Schenkeln 10 aufeinander zu ragen. Das Führungselement 15 wird durch den Grundkörper 2, die Schenkel 10 und die Laschen 14 gehalten und ist so gegen Verlieren gesichert.

Alternativ zu den Laschen 14 kann das Führungselement 15 auch durch formschlüssige Verbindungen, wie Nut und Feder Verbindungen oder Clipsverbindungen, am Grundkörper 2 befestigt werden.

Einteilig mit dem Führungselement 15 ist ein Mitnehmerelement 16 ausgebildet, welches sich entlang des gesamten Führungselementes 15 erstreckt. Das Mitnehmerelement 16 kann entweder als Führungsnut 17 (Figur 4) oder als Steg 18 (Figur 5) ausgebildet sein. In verbautem Zustand der Schaltgabel 1 wirkt das Mitnehmerelement 16 mit einem korrespondierenden Kraftübertragungselement 7a der Schiebemuffe 7 derart zusammen, dass eine Verschiebung der Schaltgabel 1 über das Mitnehmerelement 16 auf die Schiebemuffe 7 übertragen wird. Weiterhin ist denkbar mehrere, kürzere Führungselemente 15 am Grundkörper 2 anzubringen oder das Führungselement 15 nur an bestimmten Bereichen mit Mitnehmerelementen 16 zu versehen.

Das Führungselement 15 ist separat zum Grundkörper 2 und vorzugsweise aus einem geeigneten Kunststoff gefertigt. Das Kraftübertragungselement 7a der Schiebemuffe 7 wirkt an den Enden 12 und 13 und im Bereich des mittleren Abschnitts 19 des Grundkörpers 2 mit dem Führungselement 15 zusammen. Dies kann beispielsweise über einen am Außenumfang der Schiebemuffe 7 angebrachten Steg bzw. eine Nut erreicht werden, wobei die Nut der Schiebemuffe 7 den Steg 18 des Führungselements 15 übergreift bzw. der an der Schiebemuffe 7 angebrachte Steg in die Führungsnut 17 des Führungselements 15 eingreift.

Der Grundkörper 2 ist in einem spanlosen Umformverfahren aus einem Blechteil hergestellt. Als Ausgangsmaterial dient ein flacher Blechzuschnitt, der zu dem gabelförmigen Grundkörper 2 umgebogen wird. Die Enden 12 und 13 des Blechzuschnitts, in die Nuten 11 eingebracht werden sind schmaler ausgeführt als der dazwischen liegende Abschnitt. Nach dem Biegevorgang werden die in Verschieberichtung 9 der Schaltgabel 1 liegenden Ränder der Enden 12 und 13 derart umgebogen, dass die U-förmigen Profilkörper 8 entstehen. Die Schenkel 10 der U-förmigen Profilkörper 8 sind an mit aufeinander zuweisenden Laschen 14 versehen, wobei die Länge der Laschen 14 derart gewählt ist, dass sie nicht in den Bereich der Führungsnut 17 hineinragen. Die Breite b1 des Grundkörpers 2 im Bereich zwischen den Enden 12 und 13 ist größer ausgeführt als die Breite b2 des Grundkörpers 2 im Bereich der Enden 12 und 13. Dadurch gewinnt die Schaltgabel 1 an Steifigkeit. Zusätzlich ist der Grundkörper 2 im Bereich der größeren Breite b1 ebenfalls als Profilkörper 8 ausgeführt, wodurch die Steifigkeit weiterhin erhöht wird.

Die Anordnung des Führungselementes 15 innerhalb der am Grundkörper 2 ausgebildeten Nuten 11 erlaubt eine direkte Kraftübertragung der Schaltkraft von der Schaltgabel 1 auf die Schiebemuffe 7, ohne dass Hebelkräfte wirken. Das Führungselement 15 ist innerhalb der Nuten 11 gegen Verdrehen gesichert.

Die Kraftübertragung vom Grundkörper 2 auf das Führungselement 15 kann an mehreren Punkten, in dieser Ausführungsform drei Punkten, erfolgen. Weiterhin können die Bereiche zwischen den Kraftübertragungspunkten als die Schaltgabel 1 versteifende Profilkörper 8 ausgeführt sein. Dies ermöglicht den Einsatz von Dünnblech, mit den oben genannten Vorteilen, als Ausgangsmaterial, wobei sowohl Platinen- als auch Bandmaterial einsetzbar ist.

Ein weiterer Vorteil ergibt sich daraus, dass im Vergleich zur Ausführungsform im Stand der Technik bei der Montage des Führungselementes 15 keine aufwändigen Positionier- und Befestigungsmaßnahmen nötig sind.

### Bezugszahlenliste

- 1: Schaltgabel
- 2: Grundkörper
- 3: Führungshülse
- 4: Schaltarm
- 5: Gleithülse
- 6: Schaltmaul
- 7: Schiebemuffe
- 7a: Kraftübertragungselement
- 8: Profilkörper
- 9: Verschieberichtung
- 10: Schenkel
- 11: Nut
- 12: Ende
- 13: Ende
- 14: Lasche
- 15: Führungselement
- 16: Mitnehmerelement
- 17: Führungsnut
- 18: Steg
- 19: Abschnitt

- b1: Breite
- b2: Breite

## Patentansprüche

1. Schaltgabel (1) eines Stufenwechselgetriebes mit einem gabelförmig ausgebildeten Grundkörper (2) und mit mindestens einem separat zum Grundkörper (2) gefertigten Führungselement (15), wobei das Führungselement (15) fest mit dem Grundkörper (2) verbunden ist, eine Schiebemuffe (7) zumindest teilweise umgreift und mit einem Kraftübertragungselement (7a) der Schiebemuffe (7) derart zusammenwirkt, dass Verschiebungen der Schaltgabel (1) in axialer Richtung der Schiebemuffe (7) auf diese übertragen werden, der Grundkörper (2) zumindest in einem Bereich als U-förmig ausgebildeter Profilkörper (8) ausgeführt ist **dadurch gekennzeichnet, dass** das Führungselement (15) zumindest teilweise innerhalb des mindestens einen U-förmig ausgebildeten Profilkörpers (8) angebracht ist.

2. Schaltgabel (1) nach Anspruch 1, **dadurch gekennzeichnet, dass** das Führungselement (15) durch formschlüssige Elemente gegen Relativbewegungen zum Grundkörper (2) in Umfangsrichtung der Schiebemuffe (7) gesichert ist.

3. Schaltgabel (1) nach Anspruch 2, **dadurch gekennzeichnet, dass** die formschlüssigen Elemente als Laschen (14) an den Schenkeln (10) des U-förmigen Profilkörpers (8) ausgeführt sind, die aufeinander zu ragen.

4. Schaltgabel (1) nach Anspruch 1, **dadurch gekennzeichnet, dass** das Führungselement (15) sich auf der der Schiebemuffe (7) zugewandten Seite des Grundkörpers (2) im Wesentlichen von einem in Umfangsrichtung der Schiebemuffe (7) liegenden Ende (12) des Grundkörpers (2) zum anderen Ende (13) erstreckt.

5. Schaltgabel (1) nach Anspruch 1, **dadurch gekennzeichnet, dass** am Führungselement (15) mindestens ein zur Schiebemuffe (7) weisender Steg (18) ausgebildet ist.

6. Schaltgabel (1) nach Anspruch 5, **dadurch gekennzeichnet, dass** der Steg (18) sich entlang des gesamten Führungselements (15) erstreckt.

7. Schaltgabel (1) nach Anspruch 1, **dadurch gekennzeichnet, dass** am Führungselement (15) mindestens eine zur Schiebemuffe (7) hin offene Führungsnut (17) ausgebildet ist.

8. Schaltgabel (1) nach Anspruch 7, **dadurch gekennzeichnet, dass** die Führungsnut (17) sich entlang des gesamten Führungselements (15) erstreckt.

9. Schaltgabel (1) nach Anspruch 1, **dadurch gekennzeichnet, dass** die in Umfangsrichtung der Schiebemuffe (7) liegenden Enden (12 und 13) des Grundkörpers (2) als U-förmige Profilkörper (8) ausgeführt sind.

10. Schaltgabel (1) nach Anspruch 1, **dadurch gekennzeichnet, dass** der gesamte Grundkörper (2) als U-förmig ausgebildeter Profilkörper (8) ausgeführt ist.

11. Schaltgabel (1) nach Anspruch 1, **dadurch gekennzeichnet, dass** der Grundkörper (2) ein einteilig ausgeführtes Blechteil aus einem spanlosen Umformprozess ist.

12. Schaltgabel (1) nach Anspruch 1, **dadurch gekennzeichnet, dass** der U-förmig ausgebildete, als Blechteil ausgeführte Profilkörper (8) durch partielle Einformungen am Grundkörper (2) hergestellt ist.

13. Schaltgabel (1) nach Anspruch 1, **dadurch gekennzeichnet, dass** der U-förmig ausgebildete, als Blechteil ausgeführte Profilkörper (8) durch Umbiegen des Randes des Grundkörpers (2) hergestellt ist.

14. Schaltgabel (1) nach Anspruch 1, **dadurch gekennzeichnet, dass** das Führungselement (15) aus Kunststoff besteht.

## Claims

1. Selector fork (1) of a multi-step gear-change transmission, with a basic body (2) of fork-shaped design and with at least one guide element (15) manufactured separately from the basic body (2), the guide element (15) being connected fixedly to the basic body (2), and engaging at least partially around a sliding sleeve (7) and cooperating with a force transmission element (7a) of the sliding sleeve (7) in such a way that displacements of the selector fork (1) in the axial direction of the sliding sleeve (7) are transmitted to the latter, the basic body (2) being designed, at least in one region, as a U-shaped profile body (8), **characterized in that** the guide element (15) is mounted at least partially within the at least one U-shaped profile body (8).

2. Selector fork (1) according to Claim 1, **characterized in that** the guide element (15) is secured against relative movements with respect to the basic body (2) in the circumferential direction of the sliding sleeve (7) by means of form-fit elements.

3. Selector fork (1) according to Claim 2, **characterized in that** the form-fit elements are designed as tabs (14) on the legs (10) of the U-shaped profile body (8), the said tabs projecting towards one another.

4. Selector fork (1) according to Claim 1, **characterized in that** the guide element (15), on that side of the basic body (2) which faces the sliding sleeve (7), extends essentially from one end (12) of the basic body (2), the said end lying in the circumferential direction of the sliding sleeve (7), to the other end (13).

5. Selector fork (1) according to Claim 1, **characterized in that** at least one web (18) pointing towards the sliding sleeve (7) is formed on the guide element (15).

6. Selector fork (1) according to Claim 5, **characterized in that** the web (18) extends along the entire guide element (15).

7. Selector fork (1) according to Claim 1, **characterized in that** at least one guide groove (17) open towards the sliding sleeve (7) is formed on the guide element (15).

8. Selector fork (1) according to Claim 7, **characterized in that** the guide groove (17) extends along the entire guide element (15).

9. Selector fork (1) according to Claim 1, **characterized in that** the ends (12 and 13) of the basic body (2) which lie in the circumferential direction of the sliding sleeve (7) are designed as U-shaped profile bodies (8).

10. Selector fork (1) according to Claim 1, **characterized in that** the entire basic body (2) is designed as a U-shaped profile body (8).

11. Selector fork (1) according to Claim 1, **characterized in that** the basic body (2) is a sheet-metal part produced in one piece in a non-cutting forming process.

12. Selector fork (1) according to Claim 1, **characterized in that** the U-shaped profile body (8) which is in the form of a sheet-metal part is produced by means of partial forming work on the basic body (2).

13. Selector fork (1) according to Claim 1, **characterized in that** the U-shaped profile body (8) which is in the form of a sheet-metal part is produced by means of the bending-round at the edge of the basic body (2).

14. Selector fork (1) according to Claim 1, **characterized in that** the guide element (15) consists of plastic.

## Revendications

1. Fourchette de changement de vitesse (1) d'une boîte de vitesses à rapports étagés comprenant un corps de base (2) réalisé en forme de fourchette et au moins un élément de guidage (15) fabriqué séparément du corps de base (2), l'élément de guidage (15) étant connecté fixement au corps de base (2), venant en prise au moins en partie autour d'un manchon coulissant (7) et coopérant avec un élément de transfert de force (7a) du manchon coulissant (7) de telle sorte que des déplacements de la fourchette de changement de vitesse (1) dans la direction axiale du manchon coulissant (7) soient transmis à ce dernier, le corps de base (2) étant réalisé au moins dans une région sous forme de corps profilé (8) en forme de U, **caractérisée en ce que** l'élément de guidage (15) est monté au moins en partie à l'intérieur de l'au moins un corps profilé (8) en forme de U.

2. Fourchette de changement de vitesse (1) selon la revendication 1, **caractérisée en ce que** l'élément de guidage (15) est fixé par des éléments d'engagement positif pour empêcher des mouvements relatifs par rapport au corps de base (2) dans la direction périphérique du manchon coulissant (7).

3. Fourchette de changement de vitesse (1) selon la revendication 2, **caractérisée en ce que** les éléments d'engagement positif sont réalisés sous forme de pattes (14) sur les branches (10) du corps profilé (8) en forme de U, lesquelles font saillie l'une vers l'autre.

4. Fourchette de changement de vitesse (1) selon la revendication 1, **caractérisée en ce que** l'élément de guidage (15) s'étend du côté du corps de base (2) tourné vers le manchon coulissant (7) essentiellement depuis une extrémité (12) du corps de base (2) située dans la direction périphérique du manchon coulissant (7) vers l'autre extrémité (13).

5. Fourchette de changement de vitesse (1) selon la revendication 1, **caractérisée en ce qu'**au moins une nervure (18) tournée vers le manchon coulissant (7) est réalisée sur l'élément de guidage (15).

6. Fourchette de changement de vitesse (1) selon la revendication 5, **caractérisée en ce que** la nervure (18) s'étend le long de tout l'élément de guidage (15).

7. Fourchette de changement de vitesse (1) selon la revendication 1, **caractérisée en ce qu'**au moins une rainure de guidage (17) ouverte vers le manchon coulissant (7) est réalisée sur l'élément de guidage (15).

8. Fourchette de changement de vitesse (1) selon la revendication 7, **caractérisée en ce que** la rainure de guidage (17) s'étend le long de tout l'élément de guidage (15).

9. Fourchette de changement de vitesse (1) selon la revendication 1, **caractérisée en ce que** les extrémités (12 et 13) du corps de base (2) situées dans la direction périphérique du manchon coulissant (17) sont réalisées sous forme de corps profilés (8) en forme de U.

10. Fourchette de changement de vitesse (1) selon la revendication 1, **caractérisée en ce que** le corps de base entier (2) est réalisé sous forme de corps profilé (8) en forme de U.

11. Fourchette de changement de vitesse (1) selon la revendication 1, **caractérisée en ce que** le corps de base (2) est une pièce de tôle réalisée d'une seule pièce par un procédé de façonnage sans enlèvement de copeaux.

12. Fourchette de changement de vitesse (1) selon la revendication 1, **caractérisée en ce que** le corps profilé (8) en forme de U, réalisé sous forme de pièce de tôle, est fabriqué par des formations partielles sur le corps de base (2).

13. Fourchette de changement de vitesse (1) selon la revendication 1, **caractérisée en ce que** le corps profilé (8) en forme de U, réalisé sous forme de pièce de tôle, est fabriqué en repliant le bord du corps de base (2).

14. Fourchette de changement de vitesse (1) selon la revendication 1, **caractérisée en ce que** l'élément de guidage (15) est en plastique.
